# FASCICULE DE BREVET EUROPEEN

(11) **EP 1 719 940 B1**
(45) Date de publication et mention de la délivrance du brevet: **03.12.2008**
(21) Numéro de dépôt: 06290704.3
(22) Date de dépôt: 03.05.2006
(51) Int. Cl.: F16L 13/12, F16L 33/26, F16L 25/00

(54) **Flexible, en particulier pour circuit de climatisation, équipé d'un système de raccordement étanche entre un élément tubulaire rigide et un élément tubulaire souple du flexible**
Flexible Schlauchleitung für den Kreislauf einer Klimaanlage mit einem fluiddichten Verbindungssystem zwischen einem starren Rohrelement und eines Schlauchs
Flexible hose line for air conditioning circuit having a seal joint system between a rigid tubular element and a flexible tubular element

(30) Priorité: 03.05.2005 FR 0504474
(43) Date de publication de la demande: 08.11.2006
(73) Titulaire: HUTCHINSON, 75008 Paris (FR)
(72) Inventeur: Garcia, Anthony, 45700 Villemandeur (FR); Houssin, Alexandre, 45200 Montargis (FR); Jago, Gilles, 45200 Amilly (FR)
(74) Mandataire: Bolinches, Michel Jean-Marie

(56) Documents cités:
- EP-A- 0 556 019
- EP-A- 0 939 266
- FR-A- 2 764 960
- FR-A- 2 812 076
- US-A- 3 105 293
- US-A- 3 205 573
- US-A- 3 830 262
- US-A- 5 803 511
- US-A- 5 961 157

## Description

L'invention concerne un flexible, en particulier pour circuit de climatisation, équipé d'un système de raccordement étanche entre un élément tubulaire rigide et un élément tubulaire souple du flexible.

A l'heure actuelle, la tendance est de privilégier l'utilisation du gaz carbonique comme fluide frigorigène dans les systèmes de climatisation des véhicules automobiles, à la place des CFC et en particulier du R 134a. En effet, ces gaz ne sont pas compatibles avec les contraintes de l'environnement qui sont liées à la dégradation de la couche d'ozone et à l'effet de serre.

Cependant, l'utilisation du gaz carbonique nécessite des pressions et températures de fonctionnement nettement plus élevées, à savoir de l'ordre de 100 bars et 100°C en haute pression, et de 45 bars en basse pression, sachant que l'on peut atteindre des pressions extrêmes de l'ordre de 150 bars et des températures simultanées de 150°C à l'extérieur et de 180°C à l'intérieur du flexible. Par ailleurs, le gaz carbonique peut constituer un solvant pour certains produits constituant la couche interne du flexible.

L'utilisation du gaz carbonique a donc conduit les équipementiers à concevoir des flexibles à haute pression avec au moins un tube rigide en acier inoxydable et un tuyau souple constitué d'un onduleux métallique revêtu d'une tresse de renforcement par exemple, ce tube et ce tuyau étant raccordés de manière étanche par soudage au moyen d'un insert tubulaire également en acier inoxydable pour avoir une compatibilité entre les matériaux utilisés.

Le document FR-A-2 764 960 présente un flexible selon le préambule de la présente revendication 1.

Le document US-A-3 205 573 présente une méthode de brasage d'une pièce à base d'aluminium sur une pièce à base d'un métal ferreux, tel que de l'acier, ces pièces étant par exemple des conduites ou des tubes.

Un but de l'invention est de concevoir un nouveau type de raccordement entre un tube rigide et un tuyau souple tant pour un flexible haute pression que basse pression, qui soit plus économique sur le plan de la fabrication et qui limite les pertes de charges occasionnées par le raccordement.

A cet effet, l'invention propose un flexible, en particulier pour un circuit de climatisation, qui comporte un élément tubulaire rigide et un élément tubulaire souple et qui est équipé d'un système de raccordement entre ces deux éléments, l'élément tubulaire rigide étant un tube réalisé en aluminium, et le système de raccordement comprenant au moins un insert tubulaire de liaison réalisé en un matériau autre que l'aluminium et dont le module d'élasticité ou de Young est supérieur à celui de l'aluminium, ledit insert de liaison étant raccordé de manière étanche au tube et à l'élément tubulaire souple, qui est **caractérisé en ce que** lequel l'insert de liaison est réalisé en un matériau dont le module de Young est supérieur à 150.000 MPa pour en limiter l'épaisseur, alors que celui de l'aluminium n'est que de l'ordre de 70.000 MPa, et en ce que le raccordement étanche entre le tube et l'insert de liaison est effectué par une opération de brasage.

Le raccordement entre l'élément tubulaire rigide et l'insert de liaison peut être effectué par une opération de brasage à la flamme ou par induction, le cordon de brasage assurant une fonction de liaison mécanique et une fonction d'étanchéité, cette opération de brasage étant effectuée avec un apport de matière pouvant être constitué d'un mélange d'aluminium et de silicium par exemple.

Selon un premier mode de réalisation, le tube est engagé dans une première partie de l'insert jusqu'à venir en contact avec un épaulement intérieur dudit insert, et l'élément tubulaire souple peut être un onduleux métallique revêtu par exemple d'une tresse de renforcement pour un flexible haute pression d'un circuit de climatisation, et dans lequel le raccordement entre l'élément tubulaire souple et l'insert de liaison à l'extrémité d'une seconde partie dudit insert peut être effectué au moyen d'une bague en acier inoxydable par exemple soudée sur l'insert de liaison.

Selon un second mode de réalisation, le tube est engagé dans une première partie de l'insert jusqu'à venir en contact avec un épaulement intérieur dudit insert, et l'élément tubulaire souple peut être un tuyau mono ou multicouches en matière plastique et/ou en caoutchouc pour un flexible basse pression d'un circuit de climatisation, et dans lequel le raccordement entre l'élément tubulaire souple et l'insert de liaison peut être effectué au moyen d'une bague de sertissage.

L'invention a également pour objet un flexible basse pression pour circuit de climatisation avec un fluide frigorigène tel du CO₂, ce flexible comprenant au moins un tube en aluminium et un tuyau en caoutchouc et/ou en matière plastique, qui est sont raccordés l'un à l'autre par un système de raccordement selon l'invention, ainsi qu'un flexible haute pression pour circuit de climatisation avec un fluide frigorigène tel du CO₂, ce flexible comprenant au moins un tube en aluminium et un tuyau sous la forme d'un onduleux métallique revêtu par exemple d'une tresse de renforcement, qui sont raccordés l'un à l'autre par un système de raccordement selon l'invention.

Un système de raccordement selon l'invention présente de nombreux avantages parmi lesquels il faut notamment citer :
- la possibilité de réduire l'épaisseur de l'insert de liaison réalisé en acier inoxydable qui est un matériau plus rigide que l'aluminium, ce qui permet de réduire les pertes de charge ; et
- un coût de fabrication réduit car un tube en aluminium est moins onéreux qu'un tube en acier inoxydable.

Un flexible selon l'invention peut s'appliquer tant à un flexible à haute qu'à basse pression dans un circuit de climatisation, à un flexible dans un circuit de direction assistée ou à un flexible pour un circuit de refroidissement d'huile dans le domaine de l'industrie automobile par exemple.

D'autres avantages, caractéristiques et détails de l'invention ressortiront du complément de description qui va suivre en référence à des dessins annexés, donnés uniquement à titre d'exemple et dans lesquels :
- la figure 1 est une vue en perspective qui illustre un flexible haute ou basse pression selon l'invention, en particulier pour un circuit de climatisation, qui comprend au moins un tube rigide et un tuyau souple qui sont raccordés l'un à l'autre de manière étanche par un système de raccordement étanche ;
- la figure 2 est une vue en coupe du système de raccordement pour un flexible à haute pression selon un premier mode de réalisation de l'invention ; et
- la figure 3 est une vue en coupe d'un système de raccordement pour un flexible à basse pression selon un second mode de réalisation de l'invention.

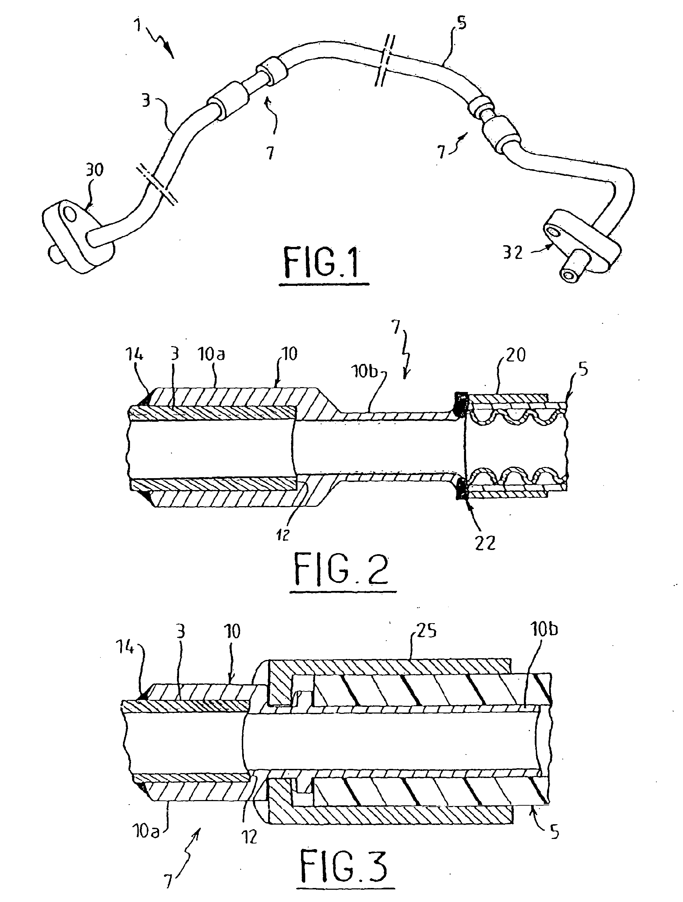

La figure 1 montre un exemple de flexible 1 à haute ou basse pression d'un circuit de climatisation pour un véhicule à moteur par exemple. Ce flexible comprend notamment un élément tubulaire rigide ou tube 3 et un élément tubulaire souple ou tuyau 5.

Le tube 3, tant pour un flexible à haute pression qu'à basse pression, est réalisé en aluminium. Par contre, le tuyau 5 peut être soit constitué par un onduleux métallique revêtu d'une tresse de renforcement pour un flexible à haute pression et un fluide frigorigène tel le gaz carbonique, soit constitué par un tuyau mono-couche ou multicouches en caoutchouc et/ou en matière plastique pour un flexible à basse pression en fonction du fluide frigorigène transporté.

Le tube 3 et le tuyau 5 sont raccordés l'un à l'autre de manière étanche au moyen d'un système de raccordement 7 selon l'invention qui comprend notamment un insert tubulaire rigide de liaison 10 qui présente la particularité d'être réalisé en un matériau rigide autre que l'aluminium constituant le tube 3, et dont le module d'élasticité ou de Young est notablement supérieur à celui de l'aluminium qui est de l'ordre de 70.000 MPa. A titre d'exemple, ce matériau est un acier inoxydable dont le module de Young est supérieur à 150.000 MPa. Cet insert de liaison 10 présente une première partie 10a qui se raccorde de façon étanche à une extrémité du tube 3, et une seconde partie 10b qui se raccorde de façon étanche à une extrémité du tuyau 5.

Dans un exemple de réalisation illustré aux figures 2 et 3, l'extrémité du tube 3 est engagé avec un minimum de jeu dans la première partie 10a de l'insert 10 jusqu'à venir en contact avec un épaulement intérieur 12 de l'insert 10. Le diamètre intérieur du tube 3 correspond globalement à celui de l'insert 10 pour limiter au maximum les pertes de charge. Le raccordement étanche entre le tube 3 en aluminium et l'insert 10 en acier inoxydable peut être réalisé par une opération de brasage qui peut être faite à la flamme ou par induction avec un apport de matière qui peut être par exemple un mélange à base d'aluminium (de l'ordre de 88%) et de silicium (de l'ordre de 12%). Le brasage est réalisé sous la forme d'un cordon circulaire 14 à l'extrémité libre de la première partie 10a de l'insert 10 qui est sensiblement au contact du tube 3. Le cordon 14 assure à la fois une fonction de liaison mécanique et une fonction d'étanchéité.

La figure 2 illustre également le mode de raccordement entre l'insert de liaison 10 et le tuyau 5 dans le cas d'un flexible à haute pression où ce tuyau est constitué par un onduleux métallique revêtu d'une tresse de renforcement par exemple. Ce raccordement étanche peut se faire par simple soudage en utilisant une bague 20 avantageusement réalisée en acier inoxydable tout comme l'insert de liaison 10. La bague 20 est rapportée autour du tuyau 5 jusqu'à venir en contact avec l'extrémité libre de la seconde partie 10b de l'insert de liaison 10, et le cordon de soudure 22 effectué au niveau de ce contact assure à la fois une fonction de liaison mécanique et une fonction d'étanchéité.

La figure 3 illustre également le mode de raccordement entre l'insert de liaison 10 et le tuyau 5 dans le cas d'un flexible à basse pression où ce tuyau est réalisé en caoutchouc et/ou en matière plastique suivant une ou plusieurs couches. Le mode de raccordement étanche peut être assuré par une bague de sertissage 25 rapportée autour de la seconde partie 10b de l'insert 10 avec emprisonnement du tuyau 4 entre elles avant l'opération de sertissage qui va assurer à la fois une fonction de liaison mécanique et une fonction d'étanchéité.

Dans le flexible 1 illustré à la figure 1, le tube 3 en aluminium forme une extrémité du flexible et comporte une connectique de raccordement 30 intégré au tube 3, et le tuyau 5 est également raccordé à un embout de raccordement 32 en aluminium, comme le tube 3, qui est raccordé de manière étanche au tuyau 5 par un système de raccordement 7 selon la figure 2 pour un flexible à haute pression ou selon la figure 3 pour un flexible à basse pression.

Il est important de noter que la dureté de l'insert de liaison 10 permet d'en limiter l'épaisseur, ce qui réduit d'autant les pertes de charge.

L'invention a été décrite pour un flexible de climatisation, mais elle pourrait également s'appliquer à un flexible d'un circuit de direction assistée ou à un flexible d'un circuit de refroidissement d'huile dans le domaine de l'industrie automobile par exemple, mais sans exclure son utilisation dans d'autres domaines de l'industrie.

## Revendications

1. Flexible, en particulier pour un circuit de climatisation, qui comporte un élément tubulaire rigide et un élément tubulaire souple (5) et qui est équipé d'un système de raccordement entre ces deux éléments, l'élément tubulaire rigide étant un tube (3) réalisé en aluminium, et le système de raccordement (7) comprenant au moins un insert tubulaire rigide de liaison (10) réalisé en un matériau autre que l'aluminium et dont le module d'élasticité ou de Young est supérieur à celui de l'aluminium, ledit insert de liaison (10) étant raccordé de manière étanche au tube (3) et à l'élément tubulaire souple (5), **caractérisé en ce que** lequel l'insert de liaison (10) est réalisé en un matériau dont le module de Young est supérieur à 150 000 MPa pour en limiter l'épaisseur, alors que celui de l'aluminium n'est que de l'ordre de 70 000 MPa, et **en ce que** le raccordement étanche (14) entre le tube (3) et l'insert de liaison (10) est effectué par une opération de brasage.

2. Flexible selon la revendication 1, dans lequel le matériau de l'insert de liaison (10) est un acier inoxydable.

3. Flexible selon la revendication 1 ou 2, dans lequel l'opération de brasage est effectuée à la flamme ou par induction avec un apport de matière pour former un cordon de brasage (14) assurant une liaison mécanique et l'étanchéité.

4. Flexible selon la revendication 3, dans lequel l'apport de matière est un mélange d'aluminium et de silicium.

5. Flexible selon l'une des revendications précédentes, dans lequel le tube (3) est engagé dans une première partie (10a) de l'insert (10) jusqu'à venir en contact avec un épaulement intérieur (12) de l'insert (10), et l'élément tubulaire souple est un tuyau (5) constitué par un onduleux métallique recouvert d'une tresse de renforcement pour un flexible haute pression d'un circuit de climatisation, et dans lequel le raccordement entre le tuyau (5) et l'insert de liaison (10) est effectué à l'extrémité d'une seconde partie (10b) de l'insert (10) au moyen d'une bague (20) en acier inoxydable par exemple soudée sur l'insert de liaison (10).

6. Flexible selon l'une des revendications 1 à 4, dans lequel le tube (3) est engagé dans une première partie (10a) de l'insert (10) jusqu'à venir en contact avec un épaulement intérieur (12) de l'insert (10), et l'élément tubulaire souple est constitué par un tuyau (5) mono ou multicouches en matière plastique et/ou en caoutchouc pour un flexible basse pression d'un circuit de climatisation, et dans lequel le raccordement étanche entre le tuyau (5) et l'insert de liaison (10) est effectué au moyen d'une bague de sertissage (25).

7. Flexible basse pression pour circuit de climatisation par exemple avec un fluide frigorigène tel du CO₂, ce flexible comprenant au moins un tube (3) en aluminium et un tuyau (5) en caoutchouc et/ou en matière plastique, **caractérisé par** un système de raccordement tel que défini par l'une des revendications 1 à 4 et 6.

8. Flexible haute pression pour circuit de climatisation par exemple avec un fluide frigorigène tel du CO2, ce flexible comprenant au moins un tube (3) et un tuyau (5) sous la forme d'un onduleux métallique recouvert d'une gaine en acier inoxydable, **caractérisé par** un système de raccordement tel que défini par l'une des revendications 1 à 5.

## Claims

1. Flexible hose, in particular for an air conditioning circuit, which comprises a rigid tubular element and a flexible tubular element (5) and which is fitted with a connection system between these two elements, the rigid tubular element being a tube (3) made from aluminium and the connection system (7) comprising at least one rigid tubular joint insert (10) made from a material other than aluminium and the modulus of elasticity or Young's modulus of which is higher than that of aluminium, which joint insert (10) is connected to the tube (3) and to the flexible tubular element (5) in a sealed arrangement, **characterised in that** the joint insert (10) is made from a material with a Young's modulus higher than 150 000 MPa so as to limit the thickness thereof, whereas that of the aluminium is in the order of only 70 000 MPa, and **in that** the sealed connection (14) between the tube (3) and the joint insert (10) is produced by a brazing operation.

2. Flexible hose as claimed in claim 1, in which the material used for the joint insert (10) is a stainless steel.

3. Flexible hose as claimed in claim 1 or 2, in which the brazing operation is carried out using a flame or by induction involving the use of additional material to form a brazing bead (14) producing a mechanical joint and affording a seal.

4. Flexible hose as claimed in claim 3, in which the additional material is a mixture of aluminium and silicon.

5. Flexible hose as claimed in one of the preceding claims, in which the tube (3) is introduced into a first part (10a) of the insert (10) until it comes into contact with an internal shoulder (12) of the insert (10), and the flexible tubular element is a pipe (5) consisting of a metal corrugated pipe covered with a reinforcing braid for a high-pressure flexible hose of an air conditioning circuit, and in which the connection between the pipe (5) and the joint insert (10) is produced at the end of a second part (10b) of the insert (10) by means of a ring (20) made from stainless steel which is welded onto the joint insert (10) for example.

6. Flexible hose as claimed in one of claims 1 to 4, in which the tube (3) is introduced into a first part (10a) of the insert (10) until it comes into contact with an internal shoulder (12) of the insert (10), and the flexible tubular element is a single or multi-layered pipe (5) made from plastic material and/or rubber for a low-pressure flexible hose of an air conditioning circuit, and in which the sealed connection between the pipe (5) and the joint insert (10) is produced by means of a crimping bush (25).

7. Low-pressure flexible hose for an air conditioning circuit operating with a refrigerant fluid such as CO₂ for example, which flexible hose comprises at least a tube (3) made from aluminium and a pipe (5) made from rubber and/or plastic material, **characterised by** a connecting system as defined in one of claims 1 to 4 and 6.

8. High-pressure flexible hose for an air conditioning circuit operating with a refrigerant fluid such as CO₂ for example, which flexible hose comprises at least a tube (3) and a pipe (5) in the form of a metal corrugated hose covered with a braid of stainless steel, **characterised by** a connecting system as defined in one of claims 1 to 5.

## Patentansprüche

1. Flexibles System, insbesondere für einen Klimatisierungskreislauf, der ein starres rohrförmiges Element und ein biegsames rohrförmiges Element (5) umfasst und der mit einem Verbindungssystem zwischen diesen zwei Elementen ausgestattet ist, wobei das starre rohrförmige Element ein Rohr (3) ist, das aus Aluminium hergestellt ist, und das Verbindungssystem (7) wenigstens einen starren rohrförmigen Verbindungseinsatz (10) umfasst, der aus einem anderen Material als Aluminium hergestellt ist und dessen Elastizitätsmodul oder Young-Modul über dem von Aluminium ist, wobei der Verbindungseinsatz (10) in dichter Weise mit dem Rohr (3) und mit dem biegsamen rohrförmigen Element (5) verbunden ist, **dadurch gekennzeichnet, dass** der Verbindungseinsatz (10) aus einem Material hergestellt ist, dessen Young-Modul über 150000 MPa liegt, um **dadurch** die Dicke zu limitieren, während der von Aluminium nur in der Größenordnung von 70000 MPa liegt, und **dadurch gekennzeichnet, dass** die dichte Verbindung (14) zwischen dem Rohr (3) und dem Verbindungseinsatz (10) durch einen Lötvorgang bewerkstelligt wird.

2. Flexibles System nach Anspruch 1, bei dem das Material des Verbindungseinsatzes (10) ein rostfreier Stahl ist.

3. Flexibles System nach Anspruch 1 oder 2, bei dem der Lötvorgang mit Flamme oder durch Induktion mit einer Materialzufuhr durchgeführt wird, um einen Lötwulst (14) zu bilden, der eine mechanische Bindung und die Dichtigkeit gewährleistet.

4. Flexibles System nach Anspruch 3, bei dem die Materialzufuhr ein Gemisch aus Aluminium und Silizium ist.

5. Flexibles System nach einem der vorangehenden Ansprüche, bei dem das Rohr (3) in einen ersten Teil (10a) des Einsatzes (10) gesteckt ist, bis es mit einer inneren Schulter (12) des Einsatzes (10) in Kontakt kommt, und das biegsame rohrförmige Element ein Schlauch (5) ist, das von einem wellenförmigen Metall gebildet wird, welches von einer Verstärkungsverflechtung überzogen ist, für ein flexibles Hochdrucksystem eines Klimatisierungskreislaufs, und in dem die Verbindung zwischen dem Rohr (5) und dem Verbindungseinsatz (10) am Ende durch einen zweiten Teil (10b) des Einsatzes (10) mit Hilfe eines Rings (20) aus rostfreiem Stahl, der z.B. an den Verbindungseinsatz (10) geschweißt ist, bewerkstelligt wird.

6. Flexibles System nach einem der Ansprüche 1-4, bei dem das Rohr (3) in einem ersten Teil (10a) des Einsatzes (10) eingeschoben ist, bis es mit einer inneren Schulter (12) des Einsatzes (10) in Kontakt kommt, und das biegsame Rohrelement aus einem Ein- oder Mehrschichten-Schlauch (5) aus Kunststoff und/oder Kautschuk für ein flexibles Niederdrucksystem eines Klimatisierungskreislaufs besteht, und bei dem die dichte Verbindung zwischen dem Rohr (5) und dem Verbindungseinsatz (10) mit Hilfe eines Schrumpfrings (25) bewerkstelligt wird.

7. Flexibles Niederdrucksystem für einen Klimatisierungskreislauf z.B. mit einem Kältemittel wie CO₂, wobei dieses flexible System wenigstens ein Rohr (3) aus Aluminium und einen Schlauch (5) aus Kautschuk und/oder Kunststoffmaterial umfasst, **gekennzeichnet durch** ein Verbindungssystem, wie es durch einen der Ansprüche 1-4 und 6 definiert ist.

8. Flexibles Hochdrucksystem für einen Klimatisierungskreislauf z.B. mit einem Kältemittel wie CO₂, wobei dieses flexible System wenigstens ein Rohr (3) und einen Schlauch (5) in der Form eines gewellten Metalls, überzogen mit einer Ummantelung aus rostfreiem Stahl, umfasst, **gekennzeichnet durch** ein Verbindungssystem, wie es **durch** einen der Ansprüche 1-5 definiert ist.
